(19) Europäisches Patentamt
European Patent Office
Office européen des brevets

(11) **EP 4 685 936 A1**

(12) **EUROPEAN PATENT APPLICATION**
published in accordance with Art. 153(4) EPC

(43) Date of publication:
**28.01.2026 Bulletin 2026/05**

(21) Application number: **23959884.0**

(22) Date of filing: **30.11.2023**

(51) International Patent Classification (IPC):
***H01M 50/103*** (2021.01)

(52) Cooperative Patent Classification (CPC):
**H01M 50/103; Y02E 60/10**

(86) International application number:
**PCT/CN2023/135627**

(87) International publication number:
**WO 2025/111971 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• CHEN, Xinxiang
  **Ningde, Fujian 352100 (CN)**

• LIN, Denghua
  **Ningde, Fujian 352100 (CN)**
• HUANG, Shoujun
  **Ningde, Fujian 352100 (CN)**
• ZHENG, Yulian
  **Ningde, Fujian 352100 (CN)**
• WANG, Peng
  **Ningde, Fujian 352100 (CN)**
• JIN, Haizu
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY CELL, BATTERY, ELECTRIC APPARATUS, AND ENERGY STORAGE DEVICE**

(57) Provided in the embodiments of the present application are a battery cell, a battery, an electric apparatus, and an energy storage device. The battery cell comprises a casing. The casing comprises a casing body and an end cap, wherein the casing body is provided with an opening and comprises two first walls arranged opposite to each other in a first direction and two second walls arranged opposite to each other in a second direction, and the area of an outer surface of the first wall is smaller than the area of an outer surface of the second wall; the first wall comprises a first opening portion and a first body portion, which are distributed in sequence in a third direction, the third direction being parallel to the thickness direction of the end cap, and the first body portion being far away from the opening relative to the first opening portion; the end cap is connected to the first walls and the second walls and seals the opening; the dimension of the first wall in the second direction is $W_1$, the dimension of the second wall in the first direction is $W_2$, and the dimensions satisfy $0.2 \leq W_1/W_2$; and the thickness of the first opening portion is greater than the thickness of the first body portion, and the second direction, the third direction and the first direction are perpendicular to each other in a pairwise manner. On the basis of the technical solution in the present application, the reliability of the battery can be improved.

FIG. 4

**Description**

TECHNICAL FIELD

The present application relates to the technical field of batteries, and in particular, to a battery cell, a battery, an electric apparatus, and an energy storage device.

BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

In the process of manufacturing batteries, the reliability of a battery is an issue that cannot be ignored. Therefore, how to improve the reliability of the battery is a technical problem that urgently needs to be solved in battery technologies.

SUMMARY

The present application provides a battery cell, a battery, an electric apparatus, and an energy storage device, which can improve the reliability of the battery.

The present application is implemented through the following technical solutions:

In a first aspect, an embodiment of the present application provides a battery cell, comprising a casing. The casing comprises a casing body and an end cap, wherein the casing body is provided with an opening and comprises two first walls arranged opposite to each other in a first direction and two second walls arranged opposite to each other in a second direction, and the area of an outer surface of each first wall is smaller than the area of an outer surface of each second wall; each first wall comprises a first opening portion and a first body portion which are distributed in sequence in a third direction, the third direction being parallel to the thickness direction of the end cap, and the first body portion being far away from the opening relative to the first opening portion; the end cap is connected to the first walls and the second walls and seals the opening; the dimension of each first wall in the second direction is $W_1$, the dimension of each second wall in the first direction is $W_2$, and the dimensions satisfy $0.2 \leq W_1/W_2$; and the maximum thickness of the first opening portion is greater than the thickness of the first body portion, and the second direction, the third direction and the first direction are perpendicular to each other in a pairwise manner.

According to the battery cell in this embodiment of the present application, the area of the outer surface of each first wall is less than the area of the outer surface of each second wall, the first wall may be a narrow surface of the battery cell, and when the ratio of the dimension of the first wall in the second direction to the dimension of the second wall in the first direction satisfies the above relationship, the first opening portion is thickened, such that the first opening portion has high strength, which can reduce the risk of cracking of the casing body near a welding region between the casing body and the end cap when the battery cell is in thermal runaway or generates excessive gas, thereby ensuring that the battery cell has high reliability.

According to some embodiments of the present application, $W_1/W_2 \leq 0.6$.

In the above solution, when the ratio of the dimension of the first wall in the second direction to the dimension of the second wall in the first direction satisfies the above relationship, the risk of cracking of the casing body near the welding region between the casing body and the end cap can be reduced while the first opening portion has high strength.

According to some embodiments of the present application, $0.25 \leq W_1/W_2 \leq 0.35$.

In the above solution, compared with $0.2 \leq W_1/W_2$, when $0.25 \leq W_1/W_2 \leq 0.35$, the thickening treatment of the first opening portion can effectively reduce the risk of cracking of the casing body near the welding region between the casing body and the end cap, and can also improve the manufacturability of the casing body and further improve the reliability of the battery cell.

According to some embodiments of the present application, $50 \, mm \leq W_1 \leq 90 \, mm$, optionally, $60 \, mm \leq W_1 \leq 86 \, mm$.

In the above solution, when the dimension of the first wall in the second direction satisfies the above relationship, the first opening portion is thickened, which can, on the one hand, improve the strength of the first opening portion and reduce the risk of cracking of the casing body near the welding region between the casing body and the end cap, and on the other hand, facilitate processing and manufacturing. Compared with $50 \, mm \leq W_1 \leq 90 \, mm$, when $60 \, mm \leq W_1 \leq 86 \, mm$, the thickening treatment of the first opening portion can reduce the risk of cracking of the casing body near the welding region between the casing body and the end cap, and lower the difficulty of processing and manufacturing.

According to some embodiments of the present application, the maximum thickness of the first opening portion is $h_1$, the thickness of the first body portion is $h_2$, and the thicknesses satisfy $0.55 \leq h/W \leq 2.5$, $h=(h_1-h_2)/h_2$, and $W=W_1/W_2$.

In the above solution, when the maximum thickness of the first opening portion, the thickness of the first body portion, the dimension of the first wall in the second direction, and the dimension of the second wall in the first direction satisfy the above relationship, the first opening portion is thickened, such that the first opening portion has high strength, which can reduce the risk of cracking of the casing body near the welding region between the casing body and the end cap; moreover, processing and manufacturing of the first opening portion are facilitated, the first opening portion occupies a small space, and the battery cell has high energy density.

According to some embodiments of the present application, $0.6 \leq h/W \leq 1.8$.

In the above solution, compared with $0.55 \leq h/W \leq 2.5$, when $0.6 \leq h/W \leq 1.8$, the first opening portion occupies a small space, the first opening portion is less difficult to process and manufacture, and the first opening portion has high strength.

According to some embodiments of the present application, the maximum thickness of the first opening portion is $h_1$, the thickness of the first body portion is $h_2$, the area of the outer surface of the first wall is S, and the thicknesses and the area satisfy $(1/360,000)$ mm$^{-2} \leq h/S \leq (1/9,000)$ mm$^{-2}$, and $h=(h_1-h_2)/h_2$.

In the above solution, when the maximum thickness of the first opening portion, the thickness of the first body portion, and the area of the outer surface of the first wall satisfy the above relationship, processing and manufacturing are facilitated, and the first opening portion has high strength, which can reduce the risk of cracking of the casing body near the welding region between the casing body and the end cap. Moreover, the first opening portion occupies a small space, and the battery cell has high energy density.

According to some embodiments of the present application, $(1/300,000)$ mm$^{-2} \leq h/S \leq (1/15,000)$ mm$^{-2}$.

In the above solution, compared with $(1/360,000)$ mm$^{-2} \leq h/S \leq (1/9,000)$ mm$^{-2}$, when $(1/300,000)$ mm$^{-2} \leq h/S \leq (1/15,000)$ mm$^{-2}$, the difficulty of processing and manufacturing is lowered, the first opening portion has high strength, and the first opening occupies a small space.

According to some embodiments of the present application, $4,500$ mm$^2 \leq S \leq 36,000$ mm$^2$.

In the above solution, when the area of the outer surface of the first wall satisfies the above relationship, the battery cell has high energy density, processing and manufacturing of the first wall are facilitated, and the first opening portion has high strength, which reduces the risk of cracking of the casing body near the welding region between the casing body and the end cap.

According to some embodiments of the present application, $6,000$ mm$^2 \leq S \leq 22,500$ mm$^2$.

In the above solution, compared with $4,500$ mm$^2 \leq S \leq 36,000$ mm$^2$, when $6,000$ mm$^2 \leq S \leq 22,500$ mm$^2$, the first opening portion has high strength while the battery cell has high energy density, thereby reducing the risk of cracking of the casing body near the welding region between the casing body and the end cap.

According to some embodiments of the present application, $h_1$ and $h_2$ satisfy at least one of the following conditions: (1) $0.1 \leq h \leq 0.5$; (2) $0.55$ mm $\leq h_1 \leq 1.8$ mm; and (3) $0.5$ mm $\leq h_2 \leq 1.2$ mm.

In the above solution, when the maximum thickness of the first opening portion and the thickness of the first body portion satisfy the above relationship, processing and manufacturing are facilitated, the first opening portion has high strength, the first opening portion occupies a small space, and the battery cell has high energy density.

According to some embodiments of the present application, $h_1$ and $h_2$ satisfy at least one of the following conditions: (1) $0.15 \leq h \leq 0.3$; (2) $0.69$ mm $\leq h_1 \leq 1.56$ mm; and (3) $0.6$ mm $\leq h_2 \leq 0.8$ mm.

In the above solution, compared with $0.1 \leq h \leq 0.5$, $0.55$ mm $\leq h_1 \leq 1.8$ mm, and $0.5$ mm $\leq h_2 \leq 1.2$ mm, when $0.15 \leq h \leq 0.3$, $0.69$ mm $\leq h_1 \leq 1.56$ mm, and $0.6$ mm $\leq h_2 \leq 0.8$ mm, the difficulty of processing and manufacturing is lowered, the first opening portion has high strength, and the first opening portion occupies a small space.

According to some embodiments of the present application, the first opening portion comprises a first section and a second section connected to each other, where the first section, the second section and the first body portion are distributed in sequence in the third direction, the maximum thickness of the second section is greater than the thickness of the first body portion, the maximum thickness of the second section is greater than the maximum thickness of the first section, a first step surface is formed between the second section and the first section, and the end cap overlaps with the first step surface and is connected to the first section.

In the above solution, the first section, the second section, and the first body portion are distributed in sequence in the third direction, and the end cap is connected to the first section, such that the second section is adjacent to a joint between the end cap and the first section. The first opening portion has high strength, which can reduce the risk of cracking of the casing body near the welding region between the casing body and the end cap, and improve the service life and reliability of the battery cell. The end cap overlaps with the first step surface, which facilitates the positioning of the end cap.

According to some embodiments of the present application, each second wall comprises a second opening portion and a second body portion connected in sequence in the third direction, where the second body portion is far away from the opening relative to the second opening portion, the second opening portion is connected to the end cap, and the maximum thickness of the second opening portion is greater than the thickness of the second body portion.

In the above solution, the second opening portion is thickened, which can increase the strength of the second wall. During the charge and discharge cycle of the battery cell, due to the increased strength of the second opening portion, the risk of fatigue cracking of the casing body near the welding region between the casing body and the end cap can be reduced.

According to some embodiments of the present application, the casing body is a prismatic structure having openings at both ends, two end caps are provided, and the two end caps seal the two openings, respectively.

In the above solution, both ends of the casing body are respectively provided with the openings. The two openings are both thickened to reduce the risk of cracking of the casing body.

According to some embodiments of the present application, the battery cell further comprises an electrode assembly, where the electrode assembly comprises a positive electrode sheet, the positive electrode sheet comprises a positive active material, the positive active material comprises a nickel-containing compound, the nickel-containing compound comprises a layered lithium-containing transition metal oxide, and the ratio of a molar amount of a nickel element in the layered lithium-containing transition metal oxide to a total molar amount of transition metal elements in the layered lithium-containing transition metal oxide is not less than 50%.

In the above solution, the content of nickel is high, such that the battery cell has high energy density.

According to some embodiments of the present application, the layered lithium-containing transition metal oxide comprises $Li_aNi_bCo_cM_dO_eA_f$, where $0<a\leq1.2$, $0.6\leq b<1$ and $0<c<1$; $0<d<1$; $1\leq e\leq2$; $0\leq f\leq1$; M comprises, but is not limited to, one or more of Mn, Al, Zr, Zn, Cu, Cr, Mg, Fe, V, Ti and B; and A comprises, but is not limited to, one or more of N, F, S and Cl.

In the above solution, the content of nickel is high, such that the battery cell has high energy density; and the first opening portion has high strength, which reduces the risk of cracking of the casing body near the welding region between the casing body and the end cap.

According to some embodiments of the present application, $0.7\leq b\leq0.98$.

In the above solution, the content of nickel is high, such that the battery cell has high energy density.

According to some embodiments of the present application, $0.4\leq b/h\leq8.1$.

In the above solution, the battery cell is less difficult to manufacture, the battery cell has high energy density, the battery cell generates less gas in thermal runaway, the first walls have high strength, and the first walls have a low risk of cracking.

According to some embodiments of the present application, $1\leq b/h\leq6$.

In the above solution, compared with $0.4\leq b/h\leq8.1$, when $1\leq b/h\leq6$, each first wall has high strength, and the first opening occupies a small space. Moreover, the battery cell has high energy density, and the battery cell generates less gas in thermal runaway.

According to some embodiments of the present application, the battery cell further comprises an electrode assembly, where the electrode assembly comprises a main body portion, the main body portion is provided with an active substance, the main body portion has a first surface facing the end cap, and the first opening portion extends beyond the first surface in a direction from the first body portion to the first opening portion.

In the above solution, the first opening portion extends beyond the first surface in the direction from the first body portion to the first opening portion, such that the risk of interference between the first opening portion and the main body portion can be reduced.

According to some embodiments of the present application, the casing body and the end cap are welded to form a welding region, an average grain size of a part of the first opening portion other than the welding region is greater than an average grain size of the first body portion, and the average grain size is an average grain size of grains in the thickness direction of each first wall.

In the above solution, the average grain size of the part of the first opening portion other than the welding region is greater than the average grain size of the first body portion, which helps to enhance the strength of the first opening portion, such that the first opening portion has high strength, thereby reducing the risk of cracking of the casing body near the welding region between the casing body and the end cap.

According to some embodiments of the present application, on a cross section of each first wall parallel to the thickness direction of the first wall, the number of the grains in a part of the first opening portion located below the welding region is greater than or equal to 15 in the width direction of the cross section.

In the above solution, in the width direction of the cross section, the number of grains is greater than or equal to 15, which helps to enhance the strength of the first opening portion, such that the first opening portion has high strength.

According to some embodiments of the present application, the average grain size of the part of the first opening portion other than the welding region ranges from 70 $\mu$m to 1,200 $\mu$m; and/or the average grain size of the first body portion ranges from 30 $\mu$m to 1,000 $\mu$m.

In the above solution, the average grain size of the first opening portion and/or the average grain size of the first body portion satisfies the above relationship, which helps to enhance the strength of the first opening portion, such that the first opening portion has high strength.

In a second aspect, an embodiment of the present application provides a battery, comprising the battery cell provided in any one of the above embodiments.

According to some embodiments of the present application, a plurality of battery cells are provided, the plurality of battery cells are stacked in the second direction, and the battery further comprises end plates arranged at the ends of the plurality of battery cells in the second direction.

In the above solution, the end plates are arranged at the ends of the plurality of battery cells in the second direction, and each end plate has a large area of connection with the casing body of an adjacent battery cell to form a constraint on the casing body, thereby reducing the risk of cracking of the casing body near the welding region between the casing body and the end cap.

According to some embodiments of the present application, each end plate is arranged facing a second wall.

In the above solution, the end plates are arranged facing the second walls, and the end plates have a large area of connection with the second walls. During the charge and discharge cycle of the battery cell, the end plates can constrain the second walls to reduce the risk of cracking of the casing body near the welding region between the casing body and the end cap.

In a third aspect, an embodiment of the present application provides an electric apparatus, comprising the battery cell or the battery provided in any one of the above embodiments.

In a fourth aspect, an embodiment of the present application provides an energy storage device, comprising the battery cell or the battery provided in any one of the above embodiments.

Additional aspects and advantages of the present application will be partly provided in the following description, and partly become evident in the following description or understood through the practice of the present application.

BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.

FIG. 1 is a schematic structural diagram of a vehicle provided in some embodiments of the present application;
FIG. 2 is an exploded diagram of a battery provided in some embodiments of the present application;
FIG. 3 is an exploded diagram of a battery cell provided in some embodiments of the present application;
FIG. 4 is a perspective view of a battery cell provided in some embodiments of the present application;
FIG. 5 is a sectional view of a casing body provided in some embodiments of the present application;
FIG. 6 is a partial enlarged view at A in FIG. 5;
FIG. 7 is a schematic structural diagram of a first wall provided in some embodiments of the present application;
FIG. 8 is a schematic structural diagram of a second wall provided in some embodiments of the present application;
FIG. 9 is a sectional view of a partial structure after assembly of an end cap and a casing body provided in some embodiments of the present application;
FIG. 10 is a schematic assembly diagram of end plates and a plurality of battery cells provided in some embodiments of the present application; and
FIG. 11 is a schematic assembly diagram of an end plate and a battery cell at the end provided in some embodiments of the present application.

In the drawings, the figures are not drawn to actual scale.

Description of reference numerals: 100: battery; 10: box; 11: first sub-box; 12: second sub-box; 20: battery cell; 21: casing; 21a: casing body; 21b: end cap; 211: first wall; 2111: first opening portion; 2111a: first section; 2111b: second section; 2112: first body portion; 2113: first step surface; 212: second wall; 2121: second opening portion; 2122: second body portion; 213: bottom wall; 210: welding region; 22: electrode assembly; 221: main body portion; 221a: first surface; 222: tab; 23: electrode terminal; 30: end plate; 200: controller; 300: motor; 1000: vehicle; X: third direction; Y: second direction; and Z: first direction.

DEATILED DESCRIPTION OF PREFERRED EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application shall have the same meanings as commonly understood by those skilled in the art to which the present application relates. The terms used in the specification of the present application are intended to merely describe the specific embodiments rather than to limit the present application. The terms "include", "have", and any variations thereof in the specification and claims of the present application as well as the foregoing brief description of the drawings are intended to cover non-exclusive inclusions. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. Those skilled in the art can understand specific meanings of these terms in the present application according to specific situations.

The term "and/or" in the present application is only an associative relationship for describing associated objects, indicating that three relationships may be present. For example, A and/or B may indicate three cases: the presence of only A; the presence of both A and B; and the presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

In the embodiments of the present application, the battery cell may be a secondary battery, which refers to a battery cell that may be continuously used by activating an active material by means of charging the battery cell after discharging thereof.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like.

The battery cell generally includes an electrode assembly. The electrode assembly includes a positive electrode, a negative electrode, and a spacer. During charging and discharging of the battery cell, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode and negative electrode may be a positive electrode sheet which may include a positive current collector and a positive active material disposed on at least one surface of the positive current collector.

As an example, the positive current collector has two surfaces opposite in the thickness direction thereof, and the positive active material is provided on either one or both of the two opposite surfaces of the positive current collector.

As an example, a metal foil or a composite current collector may be used for the positive current collector. For example, aluminum or stainless steel which is subjected to surface treatment by silver, stainless steel, copper, aluminum, nickel, a carbon electrode, carbon, nickel, titanium, or the like can be used as the metal foil. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive active material of a battery may also be used.

In some embodiments, the negative electrode may be a negative electrode sheet that may include a negative current collector.

As an example, a metal foil or a composite current collector may be used for the negative current collector. For example, aluminum or stainless steel which is subjected to surface treatment by silver, stainless steel, copper, aluminum, nickel, a carbon electrode, carbon, nickel, titanium, or the like can be used as the metal foil.

In some embodiments, the negative current collector has two surfaces opposite in the thickness direction thereof, and a negative active material is provided on either one or both of the two opposite surfaces of the negative current collector.

As an example, a negative active material which is known in the art for a battery may be used for the negative active material. As an example, the negative active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative active material of a battery may also be used. These negative active materials may be used alone or in combination of two or more thereof.

In some implementations, the spacer is a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics. The separator may be a single-layer thin film or may be a multi-layer composite thin film, which is not particularly limited. When the separator is a multi-layer composite thin film, materials of each layer may be the same or different, which is not particularly limited. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the electrode assembly is a wound structure. The positive electrode sheet and the negative electrode sheet are wound in a winding structure.

In some implementations, the electrode assembly is a laminated structure.

In some implementations, the battery cell may include a casing. The casing is used to enclose components such as the electrode assembly and the electrolyte. The casing may be a steel casing, an aluminum casing, a plastic casing (e.g., polypropylene), a composite metal casing (e.g., a copper-aluminum composite casing), an aluminum plastic film, or the like.

In some implementations, the casing includes an end cap and a casing body. The casing body is provided with an opening, and the end cap seals the openings to form a sealed space for accommodating substances such as the electrode assembly and the electrolyte. The casing body may be provided with one or more openings. One or more end caps may also be provided.

In some implementations, the casing is provided with at least one electrode terminal thereon, which is electrically connected to a tab of the electrode assembly. The electrode terminal may be directly connected to the tab, or may be indirectly connected to the tab through an adapter. The electrode terminal may be disposed on the end cap, or may be disposed on the casing body.

In some implementations, an explosion-proof valve is provided on the casing. The explosion-proof valve is used to release internal pressure of the battery cell.

As an example, the battery cell can be a prismatic battery cell, or a battery cell of other shapes. The prismatic battery cell includes a square-casing battery cell, a blade-shaped battery cell, and a polygonal prismatic battery cell, for example, a hexagonal prismatic battery cell and the like.

In the development of battery technologies, various design factors, for example, performance parameters such as energy density, discharge capacity, and charge/discharge rate are simultaneously taken into consideration. In addition, reliability of the battery needs to be taken into consideration.

In some embodiments, the battery cell includes a casing, where the casing includes a casing body and an end cap, the casing body is provided with an opening, and the end cap seals the opening. The end cap is usually welded to the casing body, such that the end cap is firmly connected to the casing body. Because a high temperature generated by welding the end cap and the casing body affects the performance of the end cap and the casing body, the strength of a region of the end cap and the casing body close to a weld mark is reduced. This region may be referred to as a heat affected zone. When the battery cell is in thermal runaway, or the amount of gas generated inside the battery cell is too large, since a narrow surface of the battery cell is not constrained, the heat affected zone on the narrow surface is easily influenced, such that the heat affected zone on the narrow surface cracks, thereby reducing the reliability of the battery cell.

In view of this, in order to solve the problem of fatigue cracking of the casing body and relatively low reliability of the battery cell, an embodiment of the present application provides a technical solution. The battery cell includes a casing, where the casing includes a casing body and an end cap. The casing body is provided with an opening and includes two first walls arranged opposite to each other in a first direction and two second walls arranged opposite to each other in a second direction, where the area of an outer surface of each first wall is smaller than the area of an outer surface of each second wall, each first wall includes a first opening portion and a first body portion which are distributed in sequence in a third direction, the third direction is parallel to the thickness direction of the end cap, the first body portion is far away from the opening relative to the first opening portion, and the end cap is connected to the first walls and the second walls and seals the opening. The dimension of each first wall in the second direction is $W_1$, the dimension of each second wall in the first direction is $W_2$, the dimensions satisfy $0.2 \leq W_1/W_2 \leq 0.5$, the thickness of the first opening portion is greater than the thickness of the first body portion, and the second direction, the third direction and the first direction are perpendicular to each other in a pairwise manner. This technical solution enhances the strength of the casing body, and can reduce the risk of cracking of the casing body near the welding region between the casing body and the end cap, such that the battery cell has high reliability.

In such a battery cell, the area of the outer surface of each first wall is smaller than the area of the outer surface of each second wall, and the first walls may be the narrow surfaces of the battery cell. When the ratio of the dimension of each first wall in the second direction to the dimension of each second wall in the first direction satisfies the above relationship, the first opening portion is thickened, such that the first opening portion has high strength, which can reduce the risk of cracking of the casing body near the welding region between the casing body and the end cap, thereby ensuring that the battery cell has high reliability.

The battery disclosed in the embodiments of the present application may be, but is not limited to, used in an electric device such as a vehicle, a ship, or an aircraft. The battery disclosed in the present application may be used to form a power source system of the electric device.

An embodiment of the present application provides an electric apparatus using a battery as a power source, where the electric device apparatus may be, but is not limited to, a mobile phone, a tablet computer, a notebook computer, an electric toy, an electric tool, an electric bicycle, an electric motorcycle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

For ease of description, the following embodiments are described by using an example in which an electric apparatus in an embodiment of the present application is a vehicle 1000.

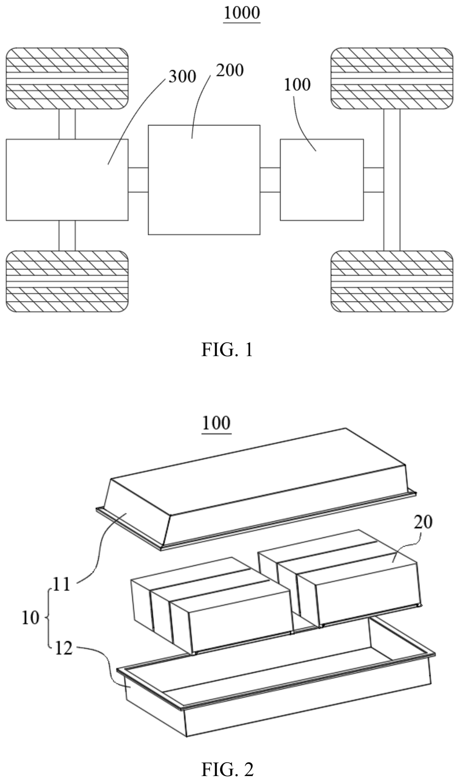

Referring to FIG. 1, FIG. 1 is a schematic structural diagram of a vehicle provided in some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used for supplying power to the vehicle 1000, for example, the battery 100 may be used as an operating power source for the vehicle 1000, and be used for circuitry of the vehicle 1000, for example, used for operating power requirements for starting, navigation, and running of the vehicle 1000.

The vehicle 1000 may further include a controller 200 and a motor 300, where the controller 200 is used to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Reference is made to FIG. 2. FIG. 2 is an exploded diagram of a battery provided in some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first sub-box 11 and a second sub-box 12, the first sub-box 11 and the second sub-box 12 cover each other, and the first sub-box 11 and the second sub-box 12 jointly define the accommodation space for accommodating the battery cell 20. The second sub-box 12 may be a hollow structure with an opening at one end, the first sub-box 11 may be a plate-shaped structure, and the first sub-box 11 covers an opening side of the second sub-box 12, such that the first sub-box 11 and the second sub-box 12 jointly define the accommodation space. Alternatively, the first sub-box 11 and the second sub-box 12 each may be a hollow structure with an opening at one end, and an opening side of the first sub-box 11 covers the opening side of the second sub-box 12.

In the battery 100, a plurality of battery cells 20 may be disposed, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a busbar component for implementing an electrical connection between the plurality of battery cells 20.

The battery cell 20 may be a secondary battery or a primary battery, and the battery cell 20 may further be a lithium-sulfur battery, a sodium-ion battery, or a magnesium-ion battery, without being limited thereto.

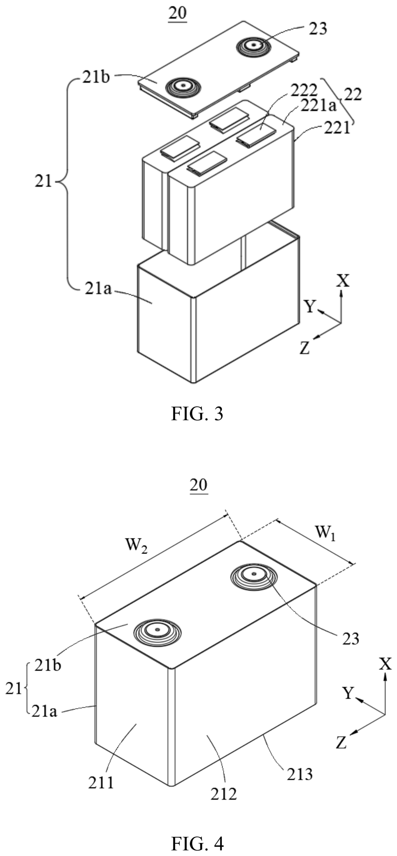

Referring to FIG. 3, FIG. 3 is an exploded diagram of a battery cell provided in some embodiments of the present application. As shown in FIG. 3, the battery cell 20 includes a casing 21, an electrode assembly 22, and other functional components. The casing 21 includes a casing body 21a and an end cap 21b. The casing body 21a is provided with an opening, and the end cap 21b seals the opening to isolate the internal environment of the battery cell 20 from the external environment.

The casing body 21a is an assembly for cooperating with the end cap 21b to form the internal environment of the battery cell 20, where the formed internal environment may be used to accommodate the electrode assembly 22, an electrolyte, and other components. The casing body 21a and the end cap 21b may be independent components. The casing body 21a may be of various shapes and dimensions. Specifically, the shape of the casing body 21a may be determined based on a specific shape and dimension of the electrode assembly 22. The casing body 21a may be made of various materials, for example, copper, iron, aluminum, stainless steel, an aluminum alloy (such as 3-series aluminum), etc.

The end cap 21b is a component that covers the opening of the casing body 21a to isolate the internal environment of the battery cell 20 from the external environment. Without limitation, the shape of the end cap 21b may be adapted to the shape of the casing body 21a to fit the casing body 21a. Optionally, the end cap 21b may be made of a material with a certain hardness and strength (e.g., an aluminum alloy). As such, the end cap 21b is less prone to deformation under compressive impact, thereby enabling the battery cell 20 to have a higher structural strength and improved reliability. The end cap 21b may be provided with a functional component such as an electrode terminal 23. The electrode terminal 23 may be configured to be electrically connected to the electrode assembly 22 for outputting electric energy from or inputting electric energy into the battery cell 20. The end cap 21b may also be made of various materials, for example, copper, iron, aluminum, stainless steel, an aluminum alloy, etc., which are not specially limited in the embodiments of the present application. In some embodiments, an insulation structure may be further disposed on an inner side of the end cap 21b, and the insulation structure may be configured to isolate an electrical connection component in the casing body 21a from the end cap 21b to reduce the risk of a short circuit. For example, the insulation structure may be made of plastic, rubber, or the like.

The electrode assembly 22 is a component in the battery cell 20 in which an electrochemical reaction occurs. The casing body 21a may include one or more electrode assemblies 22. The electrode assembly 22 is mainly formed by winding or stacking a positive electrode sheet and a negative electrode sheet, and a separator is generally disposed between the positive electrode sheet and the negative electrode sheet for separating the positive electrode sheet from the negative electrode sheet to avoid an inner short circuit between the positive electrode sheet and the negative electrode sheet. Parts of the positive electrode sheet and the negative electrode sheet having an active substance constitute a main body portion of the electrode assembly, and parts of the positive electrode sheet and the negative electrode sheet without an active substance each constitute a tab. A positive tab and a negative tab may both be located at one end of the main body portion or be located at two ends of the main body portion, respectively.

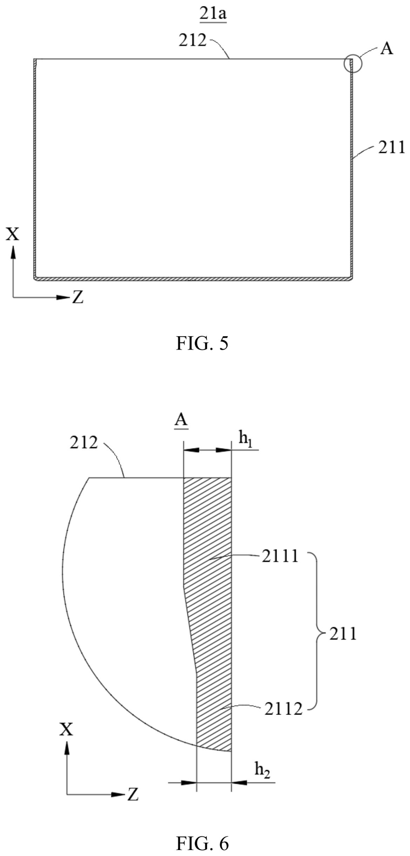

Referring to FIG. 3, and further referring to FIG. 4 to FIG. 6, FIG. 4 is a perspective view of a battery cell provided in some embodiments of the present application; FIG. 5 is a sectional view of a casing body provided in some embodiments of the present application, and FIG. 5 is a sectional view of the casing body before assembly with an end cap; and FIG. 6 is a partial enlarged view at A in FIG. 5. An embodiment of the present application provides a battery cell 20. The battery cell 20 includes a casing 21. The casing 21 includes a casing body 21a and an end cap 21b, where the casing body 21a is provided with an opening, the casing body 21a includes two first walls 211 arranged opposite to each other in a first direction Z and two second walls 212 arranged opposite to each other in a second direction Y, and the area of an outer surface of each first wall 211 is smaller than the area of an outer surface of each second wall 212. Each first wall 211 includes a first opening portion 2111 and a first body portion 2112 which are distributed in sequence in a third direction X, where the third direction X is parallel to the thickness direction of the end cap 21, and the first body portion 2112 is far away from the opening relative to the first opening portion 2111. The end cap 21b is connected to the first walls 211 and the second walls 212 and seals the opening. The dimension of each first wall 211 in the second direction Y is $W_1$, the dimension of each second wall 212 in the first direction Z is $W_2$, the dimensions satisfy $0.2 \leq W_1/W_2$, the maximum thickness of the first opening portion 2111 is greater than the thickness of the first body portion 2112, and the second direction Y, the third direction X and the first direction Z are perpendicular to each other in a pairwise manner.

In the figures, the direction indicated by the letter X may be the third direction, the direction indicated by the letter Y may be the second direction, and the direction indicated by the letter Z may be the first direction. The third direction X is parallel to the thickness direction of the end cap 21b, and the third direction X may be parallel to the height direction of the battery cell 20. The second direction Y may be parallel to the width direction of the battery cell 20. The first direction Z may be parallel to the length direction of the battery cell 20.

The first walls 211 and the second walls 212 are disposed adjacent to each other. Each first wall 211 and second wall 212 may be adjacent sidewalls of the casing body 21a. The same ends of the two first walls 211 and the two second walls 212 enclose an opening. The end cap 21b is connected to the two first walls 211 and the two second walls 212 and seals the opening. The two first walls 211 and the two second walls 212 enclose an accommodating cavity for accommodating an electrode assembly 22.

The area of the outer surface of each first wall 211 refers to the area of a surface of the first wall 211 facing away from the interior of the battery cell 20. The area of the outer surface of each second wall 212 refers to the area of a surface of the second wall 212 facing away from the interior of the battery cell 20. The area of the outer surface of each first wall 211 is smaller than the area of the outer surface of each second wall 212. The first walls 211 may be small-area surfaces of the casing body 21a. For example, the first walls 211 may be narrow surfaces of the battery cell 20.

The first opening portion 2111 and the first body portion 2112 are distributed in sequence in the third direction X. The first body portion 2112 is far away from the opening relative to the first opening portion 2111, such that the first opening portion 2111 is closer to the end cap 21b than the first body portion 2112.

The dimension of each first wall 211 in the second direction Y is smaller than the dimension of each second wall 212 in the first direction Z, and the area of the outer surface of each first wall 211 is smaller than the area of the outer surface of each second wall 212, such that the dimension of the first wall 211 in the second direction Y may be the dimension of the casing body 21a in the second direction Y, and the dimension of the second wall 212 in the first direction Z may be the dimension of the casing body 21a in the first direction Z.

In some embodiments, the first body portion 2112 may be a structure having an equal thickness, and the thickness of the first body portion 2112 may be the maximum thickness of the first body portion 2112. The first opening portion 2111 may be a structure having an equal thickness, or may be a structure having a variable thickness. When the first opening portion 2111 is a structure having an equal thickness, the maximum thickness of the first opening portion 2111 is the thickness at any position of the first opening portion 2111; and when the first opening portion 2111 is a structure having a variable thickness, the maximum thickness of the first opening portion 2111 may be the thickness at a position where the thickness of the first opening portion 2111 is the maximum.

Optionally, when the first opening portion 2111 is a structure having a variable thickness, the thickness of the first opening portion 2111 may gradually decrease from the end away from the first body portion 2112 to the end close to the first body portion 2112, and a region in which the thickness of the first opening portion 2111 is the maximum is located at the end away from the first body portion 2112.

According to the battery cell 20 in this embodiment of the present application, the area of the outer surface of each first wall 211 is smaller than the area of the outer surface of each second wall 212, the first walls 211 may be the narrow surfaces of the battery cell 20, and when the ratio of the dimension of each first wall 211 in the second direction Y to the dimension of each second wall 212 in the first direction Z satisfies the above relationship ($0.2 \leq W_1/W_2$), the first opening portion 2111 is thickened, such that the first opening portion 2111 has high strength, which can reduce the risk of cracking of the casing body 21a near the welding region between the casing body 21a and the end cap 21b when the battery cell 20 is in thermal runaway or generates excessive gas, thereby ensuring that the battery cell 20 has high reliability.

Optionally, $W_1/W_2$ may be, but is not limited to, 0.2, 0.25, 0.3, 0.35, 0.4, 0.45, 0.5, 0.6, 0.7, 0.8, 0.9, etc.

In some embodiments, in the thickness direction of each first wall 211, the first body portion 2112 has a first surface facing the interior of the battery cell 20, and part of the first opening portion 2111 may protrude from the first surface.

In some embodiments, in the thickness direction of each first wall 211, the first body portion 2112 has a second surface facing away from the interior of the battery cell 20, and part of the first opening portion 2111 may protrude from the second surface.

In some embodiments, in the thickness direction of each first wall 211, the first body portion 2112 has a first surface facing the interior of the battery cell 20 and a second surface facing away from the interior of the battery cell 20, part of the first opening portion 2111 may protrude from the first surface, and part of the first opening portion 2111 may protrude from the second surface.

In some embodiments, the first opening portion 2111 may be separately disposed or integrally formed. For example, in the manufacturing process of the casing body 21a, a thickened portion and a base body of each first wall 211 are separately disposed at the opening of the first wall 211, the thickened portion and the base body are fixedly connected to form the first opening portion 2111, and the base body forms the first body portion 2112 in a region of the first wall 211 located at the first body portion 2112. For another example, in the manufacturing process of the casing body 21a, the casing body 21a is an integrally formed structure, the casing body 21a may be formed by stamping, the first opening portion 2111 is formed at the opening of each first wall 211, and the maximum thickness of the first opening portion 2111 is greater than the thickness of the first body portion 2112.

In some embodiments, due to a difference in thickness between the first opening portion 2111 and the first body portion 2112, when part of the first opening portion 2111 protrudes from the first surface, a recess is formed between the first opening portion 2111 and the first surface of the first body portion 2112, and the main body portion 221 of the electrode assembly 22 may be disposed in the recess, or the main body portion 221 may not be in the recess. It should be noted that the recess is a recessed region formed by a height difference between the first opening portion and the first body portion.

According to some embodiments of the present application, $W_1/W_2 \leq 0.6$.

In the above solution, when the ratio of the dimension of each first wall 211 in the second direction Y to the dimension of each second wall 212 in the first direction Z satisfies the above relationship, the risk of cracking of the casing body 21a near the welding region between the casing body 21a and the end cap 21b can be reduced while the first opening portion 2111 has high strength. According to some embodiments of the present application, $0.25 \leq W_1/W_2 \leq 0.35$.

Optionally, $W_1/W_2$ may be, but is not limited to, 0.25, 0.26, 0.27, 0.28, 0.29, 0.3, 0.31, 0.32, 0.33, 0.34, 0.35, etc.

In the above solution, compared with $0.2 \leq W_1/W_2$, when $0.25 \leq W_1/W_2 \leq 0.35$, the thickening treatment of the first opening portion 2111 can effectively reduce the risk of cracking of the casing body 21a near the welding region between the casing body 21a and the end cap 21b, and can also improve the manufacturability of the casing body and further improve the reliability of the battery cell 20.

According to some embodiments of the present application, 50 mm $\leq W_1 \leq$ 90 mm, optionally, 60 mm $\leq W_1 \leq$ 86 mm.

Optionally, $W_1$ may be, but is not limited to, 50 mm, 52 mm, 54 mm, 56 mm, 58 mm, 60 mm, 62 mm, 64 mm, 66 mm, 68 mm, 70 mm, 72 mm, 74 mm, 76 mm, 78 mm, 80 mm, 82 mm, 84 mm, 86 mm, 88 mm, 90 mm, or the like.

In the above solution, when the dimension of each first wall 211 in the second direction Y satisfies the above relationship (50 mm $\leq W_1 \leq$ 90 mm), the first opening portion 2111 is thickened, which can, on the one hand, improve the strength of the first opening portion 2111 and reduce the risk of cracking of the casing body 21a near the welding region between the casing body 21a and the end cap 21b, and on the other hand, facilitate processing and manufacturing. Compared with 50 mm $\leq W_1 \leq$ 90 mm, when 60 mm $\leq W_1 \leq$ 86 mm, the thickening treatment of the first opening portion 2111 can reduce the risk of cracking of the casing body 21a near the welding region between the casing body 21a and the end cap 21b, and lower the difficulty of processing and manufacturing.

According to some embodiments of the present application, the maximum thickness of the first opening portion 2111 is $h_1$, the thickness of the first body portion 2112 is $h_2$, and the thicknesses satisfy $0.55 \leq h/W \leq 2.5$, $h=(h_1-h_2)/h_2$, and $W=W_1/W_2$.

Here, h may be a thickening ratio of the first opening portion 2111 relative to the first body portion 2112, and W is the ratio of the dimension of each first wall 211 in the second direction Y to the dimension of each second wall 212 in the first direction Z.

If h is too large, the first opening portion 2111 occupies a large space, such that the energy density of the battery cell 20 is affected, and the casing body 21a is too difficult to manufacture. If W is too small, the casing body 21a is prone to cracking at the second walls 212, and the thickening of the first walls 211 has a poor effect on improving the cracking of the casing body 21a.

If W is too large or h is too small, the casing body 21a is subjected to an excessive expansion force, the thickness of the first opening portion 2111 is small, the strength of each first wall 211 is insufficient, and each first wall 211 is prone to cracking.

In the above solution, when the maximum thickness of the first opening portion 2111, the thickness of the first body portion 2112, the dimension of each first wall 211 in the second direction Y, and the dimension of each second wall 212 in the first direction Z satisfy the above relationships, the first opening portion 2111 is thickened, such that the first opening portion 2111 has high strength, which can reduce the risk of cracking of the casing body 21a near the welding region between the casing body 21a and the end cap 21b. Moreover, processing and manufacturing of the first opening portion 2111 are facilitated, the first opening portion 2111 occupies a small space, and the battery cell 20 has high energy density.

Here, h/W may be any value between 0.55 and 2.5. Optionally, h/W may be, but is not limited to, 0.55, 0.65, 0.75, 0.85, 0.95, 1.05, 1.15, 1.25, 1.35, 1.45, 1.55, 1.65, 1.75, 1.85, 1.95, 2.05, 2.15, 2.25, 2.35, 2.45, 2.5, etc.

According to some embodiments of the present application, $W_2$ satisfies: 83 mm $\leq W_2 \leq$ 450 mm.

Optionally, $W_2$ may be, but is not limited to, 83 mm, 85 mm, 90 mm, 95 mm, 100 mm, 120 mm, 150 mm, 200 mm, 250 mm, 300 mm, 350 mm, 400 mm, 410 mm, 420 mm, 430 mm, 440 mm, 450 mm, or the like.

According to some embodiments of the present application, $0.6 \leq h/W \leq 1.8$.

Optionally, h/W may be, but is not limited to, 0.6, 0.7, 0.8, 0.9, 1, 1.1, 1.2, 1.3, 1.4, 1.5, 1.6, 1.7, 1.8, or the like.

In the above solution, compared with $0.55 \leq h/W \leq 2.5$, when $0.6 \leq h/W \leq 1.8$, the first opening portion 2111 occupies a small space, the first opening portion 2111 is less difficult to process and manufacture, and the first opening portion 2111 has high strength.

According to some embodiments of the present application, the maximum thickness of the first opening portion 2111 is $h_1$, the thickness of the first body portion 2112 is $h_2$, the area of the outer surface of each first wall 211 is S, and the thicknesses and the area satisfy $(1/360,000)$ mm$^{-2}$≤h/S≤$(1/9,000)$ mm$^{-2}$, and h=$(h_1-h_2)/h_2$.

The area S of the outer surface of each first wall 211 is the dimension of the casing body 21a in the second direction Y multiplied by the dimension of the first wall 211 in the third direction X.

In the above solution, when the maximum thickness of the first opening portion 2111, the thickness of the first body portion 2112, and the area of the outer surface of each first wall 211 satisfy the above relationships ($(1/360,000)$ mm$^{-2}$≤h/S≤$(1/9,000)$ mm$^{-2}$, and h=$(h_1-h_2)/h_2$), processing and manufacturing are facilitated, and the first opening portion 2111 has high strength, which can reduce the risk of cracking of the casing body 21a near the welding region between the casing body 21a and the end cap 21b. Moreover, the first opening portion 2111 occupies a small space, and the battery cell 20 has high energy density.

Here, h/S may be any value between $(1/360,000)$ mm$^{-2}$ and $(1/9,000)$ mm$^{-2}$. Optionally, h/S may be, but is not limited to, $(1/360,000)$ mm$^{-2}$, $(1/300,000)$ mm$^{-2}$, $(1/250,000)$ mm$^{-2}$, $(1/200,000)$ mm$^{-2}$, $(1/150,000)$ mm$^{-2}$, $(1/100,000)$ mm$^{-2}$, $(1/50,000)$ mm$^{-2}$, $(1/10,000)$ mm$^{-2}$, $(1/9,000)$ mm$^{-2}$, or the like.

According to some embodiments of the present application, $(1/300,000)$ mm$^{-2}$≤h/S≤$(1/15,000)$ mm$^{-2}$.

In the above solution, compared with $(1/360,000)$ mm$^{-2}$≤h/S≤$(1/9,000)$ mm$^{-2}$, when $(1/300,000)$ mm$^{-2}$≤h/S≤$(1/15,000)$ mm$^{-2}$, the difficulty of processing and manufacturing is lowered, the first opening portion 2111 has high strength, and the first opening portion 2111 occupies a small space.

Optionally, h/S may be, but is not limited to, $(1/300,000)$ mm$^{-2}$, $(1/200,000)$ mm$^{-2}$, $(1/100,000)$ mm$^{-2}$, $(1/50,000)$ mm$^{-2}$, $(1/40,000)$ mm$^{-2}$, $(1/30,000)$ mm$^{-2}$, $(1/20,000)$ mm$^{-2}$, $(1/15,000)$ mm$^{-2}$, or the like.

According to some embodiments of the present application, $(1/240,000)$ mm$^{-2}$≤h/S≤$(1/22,500)$ mm$^{-2}$.

According to some embodiments of the present application, 4,500 mm$^2$≤S≤36,000 mm$^2$.

Optionally, S may be, but is not limited to, 4,500 mm$^2$, 5,000 mm$^2$, 6,000 mm$^2$, 10,000 mm$^2$, 20,000 mm$^2$, 30,000 mm$^2$, 36,000 mm$^2$, or the like.

In the above solution, when the area of the outer surface of each first wall 211 satisfies the above relationship, the battery cell 20 has high energy density, processing and manufacturing of the first wall 211 are facilitated, and the first opening portion 2111 has high strength, which reduces the risk of cracking of the casing body 21a near the welding region between the casing body 21a and the end cap 21b.

According to some embodiments of the present application, 6,000 mm$^2$≤S≤22,500 mm$^2$.

Optionally, S may be, but is not limited to, 6,000 mm$^2$, 6,500 mm$^2$, 7,000 mm$^2$, 7,500 mm$^2$, 8,000 mm$^2$, 9,000 mm$^2$, 10,000 mm$^2$, 11,000 mm$^2$, 12,000 mm$^2$, 13,000 mm$^2$, 14,000 mm$^2$, 15,000 mm$^2$, 16,000 mm$^2$, 17,000 mm$^2$, 18,000 mm$^2$, 19,000 mm$^2$, 20,000 mm$^2$, 21,000 mm$^2$, 21,500 mm$^2$, 22,000 mm$^2$, 22,500 mm$^2$, or the like.

In the above solution, compared with 4,500 mm$^2$≤S≤36,000 mm$^2$, when 6,000 mm$^2$≤S≤22,500 mm$^2$, the first opening portion 2111 has high strength while the battery cell 20 has high energy density, thereby reducing the risk of cracking of the casing body 21a near the welding region between the casing body 21a and the end cap 21b.

According to some embodiments of the present application, $h_1$ and $h_2$ satisfy at least one of the following conditions: (1) 0.1≤h≤0.5; (2) 0.55 mm≤$h_1$≤1.8 mm; and (3) 0.5 mm≤$h_2$≤1.2 mm.

Optionally, h may be, but is not limited to, 0.1, 0.15, 0.2, 0.25, 0.3, 0.35, 0.4, 0.48, 0.5, or the like.

Optionally, $h_1$ may be, but is not limited to, 0.55, 0.69, 0.84, 1, 1.17, 1.35, 1.54, 1.7, 1.8, or the like.

Optionally, $h_2$ may be, but is not limited to, 0.5, 0.6, 0.7, 0.8, 0.9, 1, 1.1, 1.15, 1.2, or the like.

In the above solution, when the maximum thickness of the first opening portion 2111 and the thickness of the first body portion 2112 satisfy the above relationship, processing and manufacturing are facilitated, the first opening portion 2111 has high strength, the first opening portion 2111 occupies a small space, and the battery cell 20 has high energy density.

According to some embodiments of the present application, $h_1$ and $h_2$ satisfy at least one of the following conditions: (1) 0.15≤h≤0.3; (2) 0.69 mm≤$h_1$≤1.04 mm; and (3) 0.6 mm≤$h_2$≤0.8 mm.

Optionally, h may be, but is not limited to, 0.15, 0.17, 0.19, 0.21, 0.23, 0.25, 0.27, 0.3, or the like.

Optionally, $h_1$ may be, but is not limited to, 0.69 mm, 0.75 mm, 0.79 mm, 0.82 mm, 0.9 mm, 0.94 mm, 1.04 mm, or the like.

Optionally, $h_2$ may be, but is not limited to, 0.6 mm, 0.64 mm, 0.66 mm, 0.68 mm, 0.7 mm, 0.72 mm, 0.74 mm, 0.8 mm, or the like.

In the above solution, compared with 0.1≤h≤0.5, 0.55 mm≤$h_1$≤1.8 mm, and 0.5 mm≤$h_2$≤1.2 mm, when 0.15≤h≤0.3, 0.69 mm≤$h_1$≤1.56 mm, and 0.6 mm≤$h_2$≤0.8 mm, the difficulty of processing and manufacturing is lowered, the first opening portion 2111 has high strength, and the first opening portion 2111 occupies a small space.

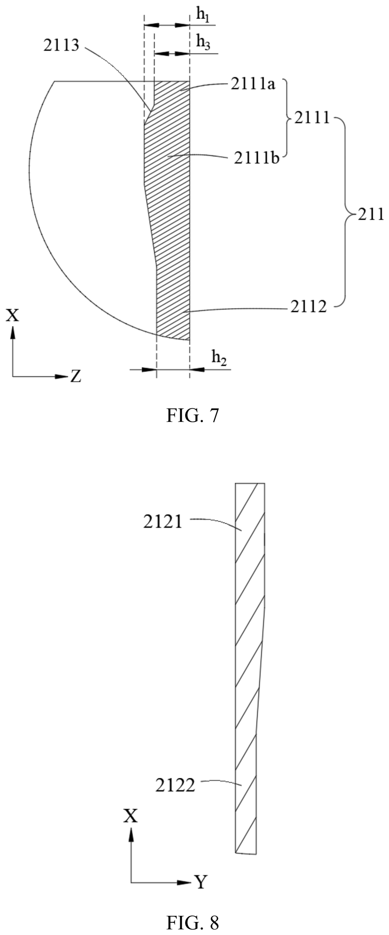

Referring to FIG. 7, FIG. 7 is a schematic structural diagram of a first wall provided in some embodiments of the present application, and FIG. 7 is a schematic structural diagram of a first wall before assembly of a casing body and an end cap. According to some embodiments of the present application, the first opening portion 2111 includes a first section 2111a and a second section 2111b that are connected to each other, where the first section 2111a, the second section 2111b and the first body portion 2112 are distributed in sequence in the third direction X, the maximum thickness of the second section 2111b is greater than the thickness of the first body portion 2112, the maximum thickness of the second section 2111b is greater than the maximum thickness of the first section 2111a, a first step surface 2113 is formed between the second section 2111b and the first section 2111a, and the end cap 21b overlaps with the first step surface 2113 and is connected to the first section 2111a.

The first section 2111a, the second section 2111b and the first body portion 2112 are distributed in sequence in the third direction X, the first section 2111a is closer to the opening than the second section 2111b, and the first section 2111a is used to be connected to the end cap 21b.

The maximum thickness of the first section 2111a may be $h_3$, the maximum thickness of the second section 2111b may be $h_1$, and the thicknesses satisfy $h_1 > h_3$, that is, the maximum thickness of the second section 2111b is greater than the maximum thickness of the first section 2111a, such that after the end cap 21b is connected to the first section 2111a, the first opening portion 2111 has high strength.

In some embodiments, $0.4\ mm \leq h_3 \leq 1.6\ mm$.

Optionally, $h_3$ may be, but is not limited to, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, or the like.

Since the first wall 211 is a narrow surface of the battery cell 20, in the manufacturing process of the battery cell 20, a region of the casing body 21a located in the first section 2111a is usually thinned, such that the maximum thickness of the region is less than the thickness of the first body portion 2112, so as to facilitate welding between the first wall 211 and the end cap 21b. In some embodiments of the present application, before the first section 2111a is connected to the end cap 21b, the region of the casing body 21a located in the first section 2111a is thickened, such that the maximum thickness of the region of the casing body 21a located in the first section 2111a is greater than or equal to the thickness of the first body portion 2112, so as to improve the firmness of connection between the first wall 211 and the end cap 21b. In some embodiments of the present application, before the first section 2111a is connected to the end cap 21b, the region of the casing body 21a located in the first section 2111a is thickened, such that the maximum thickness of the region of the casing body 21a located in the first section 2111a may be less than the thickness of the first body portion 2112, so as to improve the firmness of connection between the first wall 211 and the end cap 21b.

The second section 2111b is disposed adjacent to the first section 2111a, and at least a part of the second section 2111b is a heat affected zone after the end cap 21b is welded to the first section 2111a.

The maximum thickness of the second section 2111b is greater than the maximum thickness of the first section 2111a, the first step surface 2113 is formed between the second section 2111b and the first section 2111a, and in the manufacturing process of the battery cell 20, the end cap 21b can overlap with the first step surface 2113, so as to position the end cap 21b.

In the above solution, the first section 2111a, the second section 2111b and the first body portion 2112 are distributed in sequence in the third direction X, and the end cap 21b is connected to the first section 2111a, such that the second section 2111b is adjacent to a joint between the end cap 21b and the first section 2111a. The first opening portion 2111 has high strength, which can reduce the risk of cracking of the casing body 21a near the welding region between the casing body 21a and the end cap 21b, and improve the service life and reliability of the battery cell 20.

Referring to FIG. 8, FIG. 8 is a schematic structural diagram of a second wall provided in some embodiments of the present application. According to some embodiments of the present application, the second wall 212 includes a second opening portion 2121 and a second body portion 2122 connected in sequence in the third direction X, where the second body portion 2122 is far away from the opening relative to the second opening portion 2121, the second opening portion 2121 is connected to the end cap 21b, and the maximum thickness of the second opening portion 2121 is greater than the thickness of the second body portion 2122.

In the third direction X, the second body portion 2122 is far away from the opening relative to the second opening portion 2121, and the second opening portion 2121 may enclose the opening.

In some embodiments, the end cap 21b may be welded to a part of the second opening portion 2121 to form a second welding region which may be referred to as a weld mark.

In some embodiments, the second body portion 2122 may be a structure having an equal thickness, and the thickness of the second body portion 2122 may be the maximum thickness of the second body portion 2122. The second opening portion 2121 may be a structure having an equal thickness, or may be a structure having a variable thickness. When the second opening portion 2121 is a structure having an equal thickness, the maximum thickness of the second opening portion 2121 is the thickness at any position of the second opening portion 2121; and when the second opening portion 2121 is a structure having a variable thickness, the maximum thickness of the second opening portion 2121 may be the thickness at a position where the thickness of the second opening portion 2121 is the maximum.

Optionally, when the second opening portion 2121 is a structure having a variable thickness, the thickness of the second opening portion 2121 may gradually decrease from the end away from the second body portion 2122 to the end close to the second body portion 2122, and a region where the thickness of the second opening portion 2121 is the maximum is located at the end away from the second body portion 2122.

In the above solution, the second opening portion 2121 is thickened, which can increase the strength of the second wall 212. During the charge and discharge cycle of the battery cell 20, due to the increased strength of the second opening portion 2121, the risk of cracking of the casing body 21a near the welding region between the casing body 21a and the end cap 21b can be reduced.

In some embodiments, when viewed in the thickness direction of the end cap 21b, the second opening portion 2121 may partially overlap with the electrode assembly 22, or the second opening portion 2121 may not overlap with the electrode assembly 22.

According to some embodiments of the present application, the casing body 21 may further include a bottom wall 213. The two first walls 211 and the two second walls 212 are arranged around the bottom wall 213. The two first walls 211 and the two second walls 212 are integrally formed with the bottom wall 213. The bottom wall 213 is disposed opposite to the end cap 21b in the third direction X.

According to some embodiments of the present application, the casing body 21a is a prismatic structure having openings at both ends, two end caps 21b are provided, and the two end caps 21b seal the two openings, respectively.

When the casing body 21a is a prismatic structure, the battery cell 20 may be a square battery.

When the positive tab and the negative tab are disposed at two ends of the electrode assembly 22, the casing body 21a is provided with two openings, and a positive electrode terminal and a negative electrode terminal may be respectively disposed on two end caps 21b, so as to be electrically connected to the positive tab and the negative tab, respectively, to facilitate charging and discharging of the battery cell 20.

In the above solution, both ends of the casing body 21a are respectively provided with the openings. The two openings are both thickened to reduce the risk of cracking of the casing body 21a.

According to some embodiments of the present application, the battery cell 20 further includes an electrode assembly 22, where the electrode assembly 22 includes a positive electrode sheet, the positive electrode sheet includes a positive active material, the positive active material includes a nickel-containing compound, the nickel-containing compound includes a layered lithium-containing transition metal oxide, and the ratio of a molar amount of a nickel element in the layered lithium-containing transition metal oxide to a total molar amount of transition metal elements in the layered lithium-containing transition metal oxide is not less than 50%.

The content of nickel affects the energy density of the battery cell 20. The higher the content of nickel, the higher the energy density of the battery cell 20.

In the above solution, the content of nickel is high, such that the battery cell 20 has high energy density, and the first opening portion 2111 is thick and has high strength, which can reduce the risk of cracking of the casing body 21a of the battery cell 20 having a high nickel content near the welding region between the casing body 21a and the end cap 21b.

According to some embodiments of the present application, the layered lithium-containing transition metal oxide includes $Li_aNi_bCo_cM_dO_eA_f$, where $0<a\leq1.2$, $0.6\leq b<1$, and $0<c<1$; $0<d<1$; $1\leq e\leq2$; $0\leq f\leq1$; M includes, but is not limited to, one or more of Mn, Al, Zr, Zn, Cu, Cr, Mg, Fe, V, Ti and B; and A includes, but is not limited to, one or more of N, F, S and Cl.

In the above solution, the content of nickel is high, such that the battery cell 20 has high energy density, and the first opening portion 2111 has high strength, which reduces the risk of cracking of the casing body 21a of the battery cell 20 having a high nickel content near the welding region between the casing body 21a and the end cap 21b.

According to some embodiments of the present application, $0.7\leq b\leq0.98$.

Optionally, b may be, but is not limited to, 0.7, 0.72, 0.74, 0.76, 0.78, 0.8, 0.82, 0.84, 0.86, 0.88, 0.9, 0.92, 0.94, 0.96, 0.98, etc.

In the above solution, the content of nickel is high, such that the battery cell 20 has high energy density.

According to some embodiments of the present application, $0.4\leq b/h\leq8.1$.

Optionally, b/h may be, but is not limited to, 0.4, 1.1, 1.8, 2.5, 3.2, 3.9, 4.6, 5, 5.7, 6.4, 7.1, 7.8, 8.1, etc.

In the above solution, the battery cell 20 is less difficult to manufacture, the battery cell 20 has high energy density, the battery cell 20 generates less gas in thermal runaway, the first walls 211 have high strength, and the first walls 211 have a low risk of fatigue cracking.

According to some embodiments of the present application, $1\leq b/h\leq6$.

Optionally, b/h may be, but is not limited to, 1, 1.5, 2, 2.5, 3, 3.5, 4, 4.5, 5, 5.5, 6, etc.

In the above solution, compared with $0.4\leq b/h\leq8.1$, when $1\leq b/h\leq6$, each first wall 211 has high strength, and the first opening occupies a small space. Moreover, the battery cell 20 has high energy density, and the battery cell 20 generates less gas in thermal runaway.

Referring to FIG. 3, according to some embodiments of the present application, the electrode assembly 22 includes a main body portion 221, where the main body portion 221 is provided with an active substance, and the main body portion 221 has a first surface 221a facing the end cap 21b. In a direction from the first body portion 2112 to the first opening portion 2111, the first opening portion 2111 extends beyond the first surface 221a.

In some embodiments, the electrode assembly 22 further includes a tab 222 extending from the main body portion 221, where the tab 222 may extend from the first surface 221a.

The first opening portion 2111 does not overlap with the main body portion 221 when viewed in the thickness direction of each first wall 211.

In the above solution, the first opening portion 2111 extends beyond the first surface 221a in the direction from the first body portion 2112 to the first opening portion 2111, such that the risk of interference between the first opening portion 2111 and the main body portion 221 can be reduced.

According to some embodiments of the present application, in a direction from the second body portion 2122 to the second opening portion 2121, the second opening portion 2121 extends beyond the first surface 221a.

The second opening portion 2121 does not overlap with the main body portion 221 when viewed in the thickness direction of each first wall 211.

In the above solution, the second opening portion 2121 extends beyond the first surface 221a in the direction from the second body portion 2122 to the second opening portion 2121, such that the risk of interference between the second opening portion 2121 and the main body portion 221 can be reduced.

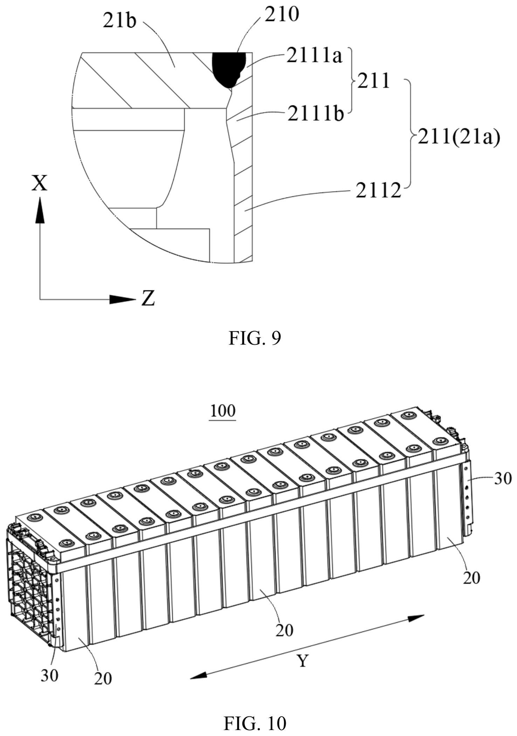

Referring to FIG. 9, FIG. 9 is a sectional view of a partial structure after assembly of an end cap and a casing body provided in some embodiments of the present application. According to some embodiments of the present application, the casing body 21a and the end cap 21b are welded to form a welding region 210, an average grain size of a part of the first opening portion 2111 other than the welding region 210 is greater than an average grain size of the first body portion 2112, and the average grain size is an average grain size of grains in the thickness direction of the first wall 211.

The welding region 210 is a region formed by welding the casing body 21a and the end cap 21b. In some embodiments, the welding region 210 may be referred to as a weld mark.

The thickness direction of the first wall 211 may be parallel to the direction Z.

For the standards of the test method for the average grain size, reference is made to GB/T 6394-2017 "Methods for Determining the Average Grain Size of Metal" and GB/T 13298-2017 "Electronic Rear-View Microscopy Method for Determining the Grain Size of a Metal Material".

In the above solution, the average grain size of the part of the first opening portion 2111 other than the welding region 210 is greater than the average grain size of the first body portion 2112, which helps to enhance the strength of the first opening portion 2111, such that the first opening portion 2111 has high strength, thereby reducing the risk of cracking of the casing body 21a near the welding region 210 between the casing body 21a and the end cap 21b.

According to some embodiments of the present application, on a cross section of each first wall 211 parallel to the thickness direction of the first wall 211, the number of the grains in a part of the first opening portion 2111 located below the welding region 210 is greater than or equal to 15 in the width direction of the cross section.

The width direction of the cross section may be parallel to the direction Z.

The "part of the first opening portion 2111 located below the welding region 210" refers to, in FIG. 9, a part of the first opening portion 2111 located below the welding region 210 in the direction from the first opening portion 2111 to the first body portion 2112 in the X direction, that is, a part of the first opening portion 2111 located away from the welding region 210 in the direction from the first opening portion 2111 to the first body portion 2112.

In the above solution, in the width direction of the cross section, the number of the grains is greater than or equal to 15, which helps to enhance the strength of the first opening portion 2111, such that the first opening portion 2111 has high strength.

According to some embodiments of the present application, the average grain size of the part of the first opening portion 2111 other than the welding region 210 ranges from 70 $\mu$m to 1,200 $\mu$m; and/or the average grain size of the first body portion 2112 ranges from 30 $\mu$m to 1,000 $\mu$m.

Optionally, the average grain size of the part of the first opening portion 2111 other than the welding region 210 may be, but is not limited to, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1,000 $\mu$m, 1,100 $\mu$m, 1,200 $\mu$m, or the like.

Optionally, the average grain size of the first body portion 2112 may be, but is not limited to, 30 $\mu$m, 40 $\mu$m, 50 $\mu$m, 60 $\mu$m, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1,000 $\mu$m, or the like.

In the above solution, the average grain size of the first opening portion 2111 and/or the average grain size of the first body portion 2112 satisfies the above relationship, which helps to enhance the strength of the first opening portion 2111, such that the first opening portion 2111 has high strength.

According to some embodiments of the present application, an average grain size of a part of the second opening portion 2121 other than the welding region 210 is greater than an average grain size of the second body portion 2122, and the average grain size is an average grain size of grains in the thickness direction of each second wall 212.

In the above solution, the average grain size of the part of the second opening portion 2121 other than the welding region 210 is greater than the average grain size of the second body portion 2122, which helps to enhance the strength of the second opening portion 2121, such that the second opening portion 2121 has high strength, thereby reducing the risk of cracking of the casing body 21a near the welding region 210 between the casing body 21a and the end cap 21b.

According to some embodiments of the present application, on a cross section of each second wall 212 parallel to the thickness direction of the second wall 212, the number of the grains in a part of the second opening portion 2121 located below the welding region 210 is greater than or equal to 15 in the width direction of the cross section.

The width direction of the cross section is parallel to the direction Y.

The "part of the second opening portion 2121 located below the welding region 210" refers to a part of the second opening portion 2121 located below the welding region 210 in a direction from the second opening portion 2121 to the second body portion 2122 in the direction X, that is, a part of the second opening portion 2121 located away from the welding region 210 in the direction from the second opening portion 2121 to the second body portion 2122.

In the above solution, in the width direction of the cross section, the number of the grains is greater than or equal to 15, which helps to enhance the strength of the second opening portion 2121, such that the second opening portion 2121 has high strength.

According to some embodiments of the present application, the average grain size of the part of the second opening portion 2121 other than the welding region 210 ranges from 70 $\mu$m to 1,200 $\mu$m; and/or the average grain size of the second body portion 2122 ranges from 30 $\mu$m to 1,000 $\mu$m.

Optionally, the average grain size of the part of the second opening portion 2121 other than the welding region 210 may be, but is not limited to, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1,000 $\mu$m, 1,100 $\mu$m, 1,200 $\mu$m, or the like.

Optionally, the average grain size of the second body portion 2122 may be, but is not limited to, 30 $\mu$m, 40 $\mu$m, 50 $\mu$m, 60 $\mu$m, 70 $\mu$m, 80 $\mu$m, 90 $\mu$m, 100 $\mu$m, 200 $\mu$m, 300 $\mu$m, 400 $\mu$m, 500 $\mu$m, 600 $\mu$m, 700 $\mu$m, 800 $\mu$m, 900 $\mu$m, 1,000 $\mu$m, or the like.

In the above solution, the average grain size of the second opening portion 2121 and/or the average grain size of the second body portion 2122 satisfies the above relationship, which helps to enhance the strength of the second opening portion 2121, such that the second opening portion 2121 has high strength.

The structure and test data of the battery cell 20 are described below with reference to specific examples.

Example 1

In the preparation of the battery cell 20, the end cap 21b and the casing body 21a were welded by laser welding, and the casing body 21a was made of an aluminum material. The length of the battery cell 20 (the dimension $W_2$ of the casing body 21a in the first direction Z) was 220 mm, the width of the battery cell 20 (the dimension $W_1$ of the casing body 21a in the second direction Y) was 44 mm, W was 0.2, the thickness $h_2$ of each first body portion 2112 was 0.5 mm, the thickening ratio h of each first opening portion 2111 was 0.15, h/W was 0.75, the nickel content b was 0.95, and b/h was 6.3.

Example 2

Compared with Example 1, h was 0.2 and h/W was 1.

Example 3

Compared with Example 1, h was 0.5 and h/W was 2.5.

Example 4

Compared with Example 1, the width of the battery cell 20 was 55 mm, W was 0.25, h was 0.3, and h/W was 1.2.

Example 5

Compared with Example 1, the width of the battery cell 20 was 77 mm, W was 0.35, h was 0.275, and h/W was 0.79.

Example 6

Compared with Example 1, the width of the battery cell 20 was 90 mm, the length of the battery cell 20 was 180 mm, W was 0.5, h was 0.275, and h/W was 0.55.

Example 7

Compared with Example 1, the width of the battery cell 20 was 70 mm, the length of the battery cell 20 was 148 mm, W was 0.47, h was 0.5, and h/W was 1.06.

Example 8

Compared with Example 1, the width of the battery cell 20 was 70 mm, the length of the battery cell 20 was 148 mm, W was 0.47, h was 0.25, and h/W was 0.53.

Example 9

Compared with Example 1, the width of the battery cell 20 was 88.5 mm, the length of the battery cell 20 was 148 mm, W was 0.6, h was 0.35, and h/W was 0.58.

Comparative Example 1

Compared with Example 1, the width of the battery cell 20 was 33 mm, the length of the battery cell 20 was 220 mm, W was 0.15, h was 0.15, and h/W was 1.

Comparative Example 2

Compared with Example 1, the width of the battery cell 20 was 44 mm, the length of the battery cell 20 was 220 mm, W was 0.2, h was 0.1, and h/W was 0.5.

Comparative Example 3

Compared with Example 1, the width of the battery cell 20 was 70 mm, the length of the battery cell 20 was 148 mm, W was 0.47, h was 0.2, and h/W was 0.42.

The battery cells 20 in Examples 1 to 8 and Comparative Examples 1 to 3 were subjected to a short circuit test, the test method was as follows with reference to GBT31485-2015, and the test results are shown in Table 1.

In an environment with a temperature of 25°C±5°C, a relative humidity of 15% to 90%, and an atmospheric pressure of 86 kPa to 106 kPa, the battery cell 20 was charged at a constant current of $1I_1$ (A) to a charge termination voltage specified in the enterprise technical conditions and then charged at a constant voltage, the charge was stopped when the charge current dropped to $0.05I_1$ (A), and the battery cell was left to stand for 1 h after charging; and a short-circuit test was performed on the battery cell 20. A short-circuit method was as follows: short-circuiting the positive and negative electrodes of the battery cell 20 via an external circuit of which the resistance was required to be less than 5 m$\Omega$, continuing until the battery cell 20 underwent thermal runaway, and observing the integrity of the casing body 21a of the battery cell 20 in the thermal runaway state.

Table 1

| | W | Thickening ratio h | h/W | Width of battery cell (mm) | Length of battery cell (mm) | Intact status of battery cell |
|---|---|---|---|---|---|---|
| Example 1 | 0.2 | 0.15 | 0.75 | 44 | 220 | Intact casing body |
| Example 2 | 0.2 | 0.2 | 1 | 44 | 220 | Intact casing body |
| Example 3 | 0.2 | 0.5 | 2.5 | 44 | 220 | Intact casing body |
| Example 4 | 0.25 | 0.3 | 1.2 | 55 | 220 | Intact casing body |
| Example 5 | 0.35 | 0.275 | 0.79 | 77 | 220 | Intact casing body |
| Example 6 | 0.5 | 0.275 | 0.55 | 90 | 180 | Intact casing body |
| Example 7 | 0.47 | 0.5 | 1.06 | 70 | 148 | Intact casing body |
| Example 8 | 0.47 | 0.25 | 0.53 | 70 | 148 | Intact casing body |
| Example 9 | 0.6 | 0.35 | 0.58 | 88.5 | 148 | Intact casing body |
| Comparative Example 1 | 0.15 | 0.15 | 1 | 33 | 220 | Cracking of weld seam between second wall and end cap |
| Comparative Example 2 | 0.2 | 0.1 | 0.5 | 44 | 220 | Cracking of weld seam between second wall and end cap |

(continued)

|  | W | Thickening ratio h | h/W | Width of battery cell (mm) | Length of battery cell (mm) | Intact status of battery cell |
|---|---|---|---|---|---|---|
| Comparative Example 3 | 0.47 | 0.2 | 0.42 | 70 | 148 | Cracking of weld seam between second wall and end cap |

As can be seen from the comparison of the results in Examples 1 to 8 and Comparative Example 1 in Table 1, when W is too small, the second walls 212 of the casing body 21a are prone to cracking.

It can be seen from the comparison of the results in Examples 1 to 8 and Comparative Examples 2 and 3 in Table 1 that when h/W is too small, each first wall 211 of the casing body 21a is prone to cracking, and if the first opening portion 2111 of the first wall 211 is thickened, the risk of cracking of the first wall 211 and the casing body 21a can be reduced.

According to some embodiments of the present application, an embodiment of the present application provides a battery 100, including the battery cell 20 provided in any one of the above embodiments.

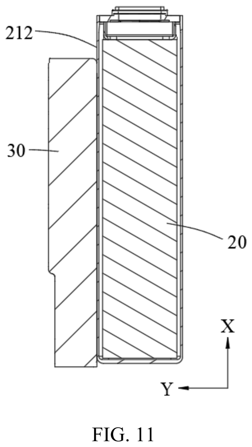

Referring to FIG. 10 and FIG. 11, FIG. 10 is a schematic assembly diagram of end plates and a plurality of battery cells provided in some embodiments of the present application, and FIG. 11 is a schematic assembly diagram of an end plate and a battery cell at the end provided in some embodiments of the present application. According to some embodiments of the present application, a plurality of battery cells 20 are provided, the battery cells are stacked in the second direction Y, and the battery 100 further includes end plates 30 arranged at the ends of the plurality of battery cells 20 in the second direction Y.

In some embodiments, in the direction from the first body portion 2112 to the first opening portion 2111, at least part of the first opening portion 2111 extends beyond the end plate 30.

The plurality of battery cells 20 are stacked in the second direction Y. In the second direction Y, the end plates 30 are disposed at the ends of the plurality of battery cells 20. The end plates 30 are connected to the battery cells 20 located at the ends in the second direction Y among the plurality of battery cells 20. The end plates 30 can limit the positions of the battery cells 20 at the ends and constrain deformation of the battery cells 20.

In the above solution, the end plates 30 are disposed at the ends of the plurality of battery cells 20 in the second direction Y, and each end plate 30 has a large area of connection with the casing body 21a of an adjacent battery cell 20 to form a constraint on the casing body 21a, thereby reducing the risk of fatigue cracking of the casing body 21a.

According to some embodiments of the present application, each end plate 30 is arranged facing a second wall 212.

In the above solution, the end plates 30 are arranged facing the second walls 212. Each end plate 30 has a large area of connection with the second wall 212. During the charge and discharge cycle of the battery cell 20, the end plate 30 can constrain the second wall 212 to reduce the risk of cracking of the casing body 21a near the welding region between the casing body 21a and the end cap 21b.

According to some embodiments of the present application, an embodiment of the present application provides an electric apparatus, including the battery cell 20 or the battery provided in any one of the above embodiments.

The electric apparatus may be any one of the above systems or devices that use the battery cell 20 or the battery 100, and the battery cell 20 or the battery 100 is used to provide electrical energy.

According to some embodiments of the present application, an embodiment of the present application provides an energy storage device, including the battery cell 20 or the battery 100 provided in any one of the above embodiments.

According to some embodiments of the present application, referring to FIG. 3 to FIG. 8, an embodiment of the present application provides a battery cell 20 which is in the shape of a rectangular cuboid. The battery cell 20 includes a casing 21, an electrode assembly 22 and an electrode terminal 23. The electrode assembly 22 is disposed in the casing 21. The casing 21 includes a casing body 21a and an end cap 21b. The electrode terminal 23 is disposed on the end cap 21b, and the electrode terminal 23 is connected to a tab of the electrode assembly 22. The casing body 21a is provided with an opening. The casing body 21a includes two first walls 211 arranged opposite to each other in a first direction Z, two second walls 212 arranged opposite to each other in a second direction Y, and a bottom wall 213. The two first walls 211 and the two second walls 212 are arranged around the bottom wall 213. The two first walls 211 and the two second walls 212 are formed integrally with the bottom wall 213. The bottom wall 213 and the end cap 21b are arranged opposite to each other in a third direction X. The end cap 21b is connected to the first walls 211 and the second walls 212 to seal the opening.

The area of an outer surface of each first wall 211 is smaller than the area of an outer surface of each second wall 212; each first wall 211 includes a first opening portion 2111 and a first body portion 2112 which are distributed in sequence in the third direction X, the third direction X being parallel to the thickness direction of the end cap 21b, and the first body portion 2112 being far away from the opening relative to the first opening portion 2111; the end cap 21b is connected to the first walls 211 and the second walls 212 and seals the opening; the dimension of each first wall 211 in the second direction Y

is $W_1$, the dimension of each second wall 212 in the first direction Z is $W_2$, and the dimensions satisfy $0.2 \leq W_1/W_2 \leq 0.5$; and the maximum thickness of the first opening portion 2111 is greater than the thickness of the first body portion 2112. The maximum thickness of the first opening portion 2111 is $h_1$, the thickness of the first body portion 2112 is $h_2$, and the thicknesses satisfy $0.55 \leq h/W \leq 2.5$, $h=(h_1-h_2)/h_2$, and $W=W_1/W_2$. The maximum thickness of the first opening portion 2111 is $h_1$, and the thickness of the first body portion 2112 is $h_2$.

According to the battery cell 20 in this embodiment of the present application, when the maximum thickness of the first opening portion 2111, the thickness of the first body portion 2112, the dimension of each first wall 211 in the second direction Y, the dimension of each second wall 212 in the first direction Z, and the area of the outer surface of each first wall 211 satisfy the above relationships, the first opening portion 2111 is thickened, such that the first opening portion 2111 has high strength, which can reduce the risk of fatigue cracking of the first wall 211 during the charge and discharge cycle of the battery cell 20. Moreover, processing and manufacturing of the first opening portion 2111 are facilitated, the first opening portion 2111 occupies a small space, and the battery cell 20 has high energy density.

Although the present application has been described with reference to some preferred embodiments, various modifications to the present application and replacements of the components therein with equivalents can be made without departing from the scope of the present application. In particular, the technical features mentioned in the embodiments may be combined in any manner provided that no structural conflict is present. The present application is not limited to the specific embodiments disclosed herein, but includes all technical solutions falling within the scope of the claims.

**Claims**

1. A battery cell, comprising:

   a casing, comprising a casing body and an end cap, the casing body being provided with an opening and comprising two first walls arranged opposite to each other in a first direction and two second walls arranged opposite to each other in a second direction, the area of an outer surface of each first wall being smaller than the area of an outer surface of each second wall, each first wall comprising a first opening portion and a first body portion which are distributed in sequence in a third direction, the third direction being parallel to the thickness direction of the end cap, the first body portion being far away from the opening relative to the first opening portion, and the end cap being connected to the first walls and the second walls and sealing the opening,
   wherein the dimension of each first wall in the second direction is $W_1$, the dimension of each second wall in the first direction is $W_2$, the dimensions satisfy $0.2 \leq W_1/W_2$, the maximum thickness of the first opening portion is greater than the thickness of the first body portion, and the second direction, the third direction and the first direction are perpendicular to each other in a pairwise manner.

2. The battery cell according to claim 1, wherein $W_1/W_2 \leq 0.6$.

3. The battery cell according to claim 1 or 2, wherein $0.25 \leq W_1/W_2 \leq 0.35$.

4. The battery cell according to claim 3, wherein $50 \text{ mm} \leq W_1 \leq 90 \text{ mm}$, optionally, $60 \text{ mm} \leq W_1 \leq 86 \text{ mm}$.

5. The battery cell according to any one of claims 1 to 4, wherein the maximum thickness of the first opening portion is $h_1$, the thickness of the first body portion is $h_2$, and the thicknesses satisfy $0.55 \leq h/W \leq 2.5$, $h=(h_1-h_2)/h_2$, and $W=W_1/W_2$.

6. The battery cell according to claim 5, wherein $0.6 \leq h/W \leq 1.8$.

7. The battery cell according to any one of claims 1 to 6, wherein the maximum thickness of the first opening portion is $h_1$, the thickness of the first body portion is $h_2$, the area of the outer surface of each first wall is S, and the thicknesses and the area satisfy $(1/360000) \text{ mm}^{-2} \leq h/S \leq (1/9000) \text{ mm}^{-2}$, and $h=(h_1-h_2)/h_2$.

8. The battery cell according to claim 7, wherein $(1/300000) \text{ mm}^{-2} \leq h/S \leq (1/15000) \text{ mm}^{-2}$.

9. The battery cell according to claim 7 or 8, wherein $4500 \text{ mm}^{-2} \leq S \leq 36000 \text{ mm}^2$.

10. The battery cell according to claim 9, wherein $6000 \text{ mm}^2 \leq S \leq 22500 \text{ mm}^2$.

11. The battery cell according to any one of claims 1 to 10, wherein the maximum thickness of the first opening portion is

$h_1$, the thickness of the first body portion is $h_2$, $h=(h_1-h_2)/h_2$, and $h_1$ and $h_2$ satisfy at least one of the following conditions:

(1)

$$0.1 \leq h \leq 0.5;$$

(2)

$$0.55 \text{ mm} \leq h_1 \leq 1.8 \text{ mm};$$

and
(3)

$$0.5 \text{ mm} \leq h_2 \leq 1.2 \text{ mm}.$$

12. The battery cell according to claim 11, wherein $h_1$ and $h_2$ satisfy at least one of the following conditions:

(1)

$$0.15 \leq h \leq 0.3;$$

(2)

$$0.69 \text{ mm} \leq h_1 \leq 1.04 \text{ mm};$$

and
(3)

$$0.6 \text{ mm} \leq h_2 \leq 0.8 \text{ mm}.$$

13. The battery cell according to any one of claims 1 to 12, wherein the first opening portion comprises a first section and a second section connected to each other, the first section, the second section and the first body portion are distributed in sequence in the third direction, the maximum thickness of the second section is greater than the thickness of the first body portion, the maximum thickness of the second section is greater than the maximum thickness of the first section, a first step surface is formed between the second section and the first section, and the end cap overlaps with the first step surface and is connected to the first section.

14. The battery cell according to any one of claims 1 to 13, wherein each second wall comprises a second opening portion and a second body portion connected in sequence in the third direction, the second body portion is far away from the opening relative to the second opening portion, the second opening portion is connected to the end cap, and the maximum thickness of the second opening portion is greater than the thickness of the second body portion.

15. The battery cell according to any one of claims 1 to 14, wherein the casing body is a prismatic structure having openings at both ends, two end caps are provided, and the two end caps seal the two openings, respectively.

16. The battery cell according to any one of claims 1 to 15, further comprising an electrode assembly, wherein the electrode assembly comprises a positive electrode sheet, the positive electrode sheet comprises a positive active material, the positive active material comprises a nickel-containing compound, the nickel-containing compound comprises a layered lithium-containing transition metal oxide, and the ratio of a molar amount of a nickel element in the layered lithium-containing transition metal oxide to a total molar amount of transition metal elements in the layered lithium-containing transition metal oxide is not less than 50%.

17. The battery cell according to claim 16, wherein the layered lithium-containing transition metal oxide comprises $Li_aNi_bCo_cM_dO_eA_f$, wherein $0<a\leq1.2$, $0.6\leq b<1$, and $0<c<1$; $0<d<1$; $1\leq e\leq2$; $0\leq f\leq1$; M comprises, but is not limited to, one or more of Mn, Al, Zr, Zn, Cu, Cr, Mg, Fe, V, Ti and B; and A comprises, but is not limited to, one or more of N, F, S and Cl.

18. The battery cell according to claim 17, wherein $0.7 \leq b \leq 0.98$.

19. The battery cell according to claim 17 or 18, wherein $0.4 \leq b/h \leq 8.1$.

20. The battery cell according to claim 19, wherein $1 \leq b/h \leq 6$.

21. The battery cell according to any one of claims 1 to 20, further comprising an electrode assembly, wherein the electrode assembly comprises a main body portion, the main body portion is provided with an active substance, the main body portion has a first surface facing the end cap, and the first opening portion extends beyond the first surface in a direction from the first body portion to the first opening portion.

22. The battery cell according to any one of claims 1 to 21, wherein the casing body and the end cap are welded to form a welding region, an average grain size of a part of the first opening portion other than the welding region is greater than an average grain size of the first body portion, and the average grain size is an average grain size of grains in the thickness direction.

23. The battery cell according to claim 22, wherein on a cross section of each first wall parallel to the thickness direction of the first wall, the number of the grains in a part of the first opening portion located below the welding region is greater than or equal to 15 in the width direction of the cross section.

24. The battery cell according to claim 22 or 23, wherein the average grain size of the part of the first opening portion other than the welding region ranges from 70 microns to 1200 microns; and/or the average grain size of the first body portion ranges from 30 microns to 1000 microns.

25. A battery, comprising the battery cell according to any one of claims 1 to 24.

26. The battery according to claim 25, wherein a plurality of battery cells are provided, the plurality of battery cells are stacked in the second direction, and the battery further comprises end plates arranged at the ends of the plurality of battery cells in the second direction.

27. The battery according to claim 26, wherein each end plate is arranged facing a second wall.

28. An electric apparatus, comprising the battery cell according to any one of claims 1 to 24 or the battery according to any one of claims 25 to 27, wherein the battery cell or the battery is configured to provide electric energy.

29. An energy storage device, comprising the battery cell according to any one of claims 1 to 24 or the battery according to any one of claims 25 to 27.

1000

FIG. 1

100

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

International application No.

**PCT/CN2023/135627**

### A. CLASSIFICATION OF SUBJECT MATTER

H01M 50/103(2021.01)i

According to International Patent Classification (IPC) or to both national classification and IPC

### B. FIELDS SEARCHED

Minimum documentation searched (classification system followed by classification symbols)

IPC: H01M 50/103

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU, 必应, BING: 电池, 端盖, 壳体, 侧壁, 加厚, 长度, 宽度, 厚度, 尺寸, 加固, 开口, 主体部, battery, end cap, housing, sidewall, thickening, length, width, thickness, dimension, reinforcement, opening, main part

### C. DOCUMENTS CONSIDERED TO BE RELEVANT

| Category* | Citation of document, with indication, where appropriate, of the relevant passages | Relevant to claim No. |
|---|---|---|
| X | CN 106129272 A (GS YUASA INTERNATIONAL LTD. et al.) 16 November 2016 (2016-11-16) description, paragraphs 63-148, and figures 3-6 | 1-29 |
| X | KR 20060027263 A (SAMSUNG SDI CO., LTD.) 27 March 2006 (2006-03-27) description, page 2, lines 20-23, and page 3, line 16 to page 5, line 18, and figures 1-2 | 1-29 |
| X | CN 212907865 U (HUIZHOU BYD BATTERY CO., LTD.) 06 April 2021 (2021-04-06) description, paragraphs 25-40, and figures 1-4 | 1-29 |
| X | CN 217589163 U (CONTEMPORARY AMPEREX TECHNOLOGY CO., LTD.) 14 October 2022 (2022-10-14) description, paragraphs 66-115, and figures 7-8 | 1-29 |
| A | CN 216720085 U (LINKDATA NEW ENERGY CO., LTD.) 10 June 2022 (2022-06-10) entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 August 2024** | **19 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/135627**

| Patent document cited in search report | | | Publication date (day/month/year) | Patent family member(s) | | | Publication date (day/month/year) |
|---|---|---|---|---|---|---|---|
| CN | 106129272 | A | 16 November 2016 | JP | 2016213063 | A | 15 December 2016 |
| | | | | JP | 6563680 | B2 | 21 August 2019 |
| | | | | US | 2017110700 | A1 | 20 April 2017 |
| | | | | US | 10424763 | B2 | 24 September 2019 |
| | | | | US | 2016329532 | A1 | 10 November 2016 |
| | | | | US | 10115933 | B2 | 30 October 2018 |
| | | | | DE | 102016207837 | A1 | 10 November 2016 |
| KR | 20060027263 | A | 27 March 2006 | None | | | |
| CN | 212907865 | U | 06 April 2021 | None | | | |
| CN | 217589163 | U | 14 October 2022 | None | | | |
| CN | 216720085 | U | 10 June 2022 | None | | | |

Form PCT/ISA/210 (patent family annex) (July 2022)